# EUROPÄISCHE PATENTSCHRIFT

(11) **EP 3 724 105 B1**
(45) Veröffentlichungstag und Bekanntmachung des Hinweises auf die Patenterteilung: **24.05.2023**
(21) Anmeldenummer: 19784022.6
(22) Anmeldetag: 04.10.2019
(51) Int. Cl.: B65G 17/38, F16G 13/06, F16G 13/20

(54) **LASCHENKETTE UND FÖRDERSTRANG FÜR EINEN FÖRDERER**
PLATE LINK CHAIN AND CONVEYING LINE FOR A CONVEYOR
CHAÎNE ARTICULÉE ET LIGNE DE CONVOYAGE POUR UN CONVOYEUR

(30) Priorität: 09.10.2018 DE 102018124851
(43) Veröffentlichungstag der Anmeldung: 21.10.2020
(73) Patentinhaber: Aumund Fördertechnik GmbH, 47495 Rheinberg (DE)
(72) Erfinder: KIRSCHNIOK, Christian, 47445 Moers (DE)
(74) Vertreter: Feucker, Max Martin
(86) Internationale Anmeldenummer: PCT/EP2019/076859
(87) Internationale Veröffentlichungsnummer: WO 2020/074371

(56) Entgegenhaltungen:
- CN-A- 105 270 822
- DE-A1- 3 438 231
- US-A- 3 338 380
- US-A- 5 307 923
- US-A1- 2013 213 775

## Beschreibung

Die vorliegende Erfindung betrifft einen Förderstrang für einen Förderer und eine Laschenkette für einen solchen Förderstrang. Der Förderstrang umfasst mindestens eine in sich geschlossene Laschenkette, die aus einer Vielzahl von Kettenglieder mit jeweils zwei Laschen besteht, mindestens ein Fördermittel, welches an der mindestens einen Laschenkette befestigt ist, und mehrere Führungselemente (beispielsweise Laufrollen) zur Führung des Förderstranges an einer Führung eines Förderers. Die Laschenkette eines solchen Förderstranges umfasst mehrere Kettenglieder, wobei jedes Kettenglied insbesondere jeweils eine erste und eine zweite Lasche, sowie jeweils mindestens eine Buchse und/oder mindestens einen Bolzen, die die zwei Laschen miteinander verbinden und zueinander beabstanden, wobei der Bolzen eines Kettenglieds innerhalb der Buchse eines benachbarten Kettenglieds drehbar angeordnet ist.

Die Erfindung betrifft insbesondere Laschenketten und Förderstränge für sogenannte Horizontalförderer, mit welchen beispielsweise Schüttgüter im Wesentlichen in horizontaler Richtung gefördert werden. Der Förderstrang eines solchen Horizontalförderers ist in sich geschlossen, wobei die Kettenglieder der Laschenkette so ausgebildet sind, dass sie im Bereich der Umlenkung vom Obertrum in den Untertrum in der Umlaufrichtung frei zueinander verschwenkt werden können. Damit die Vielzahl der Kettenglieder, die zwischen zwei benachbarten Laufrollen angeordnet sind, im Bereich des Obertrums nicht durchhängen, ist es bekannt, dass Anschläge und Gegenanschläge an benachbarten Kettengliedern ausgebildet sind, die ein Verschwenken (Scharnieren) von benachbarten Kettengliedern entgegen der Umlaufrichtung aus einer im Wesentlichen fluchtenden Anordnung heraus verhindern.

Damit ein solcher Horizontalförderer zur Überwindung von Höhenunterschieden sogenannte vertikale Kurven durchfahren kann, ist es bekannt, dass zwei benachbarte Kettenglieder, die jeweils einer Laufrolle oder einem Laufrollenpaar zugeordnet sind, keinen Anschlag/Gegenanschlag aufweisen, so dass diese benachbarten Kettenglieder auch entgegen der Umlaufrichtung zueinander frei mit einem relativ großen Schwenkwinkel zueinander verschwenkbar sind. Der eine Vielzahl von Kettengliedern umfassende Teilabschnitt der Laschenkette zwischen zwei Laufrollen(-paaren) wird als Kettenstrang bezeichnet und ist hingegen steif ausgebildet. Die benachbarten Kettenglieder eines Kettenstranges können also aus der fluchtenden Ausrichtung nicht entgegen der Umlaufrichtung zueinander verschwenkt werden. Somit wird es ermöglicht, dass der Förderstrang vertikale Kurven mit relativ großen Kurvenradien von einigen Metern durchfahren kann. Dies bedeutet aber auch, dass die Laufrollen im Bereich der benachbarten Kettengliederpaare ohne Anschlag/Gegenanschlag angeordnet sein müssen, so dass ein höherer Konstruktionsaufwand gegeben ist, da die Dimensionierung des ausgesteiften Kettenstranges berücksichtigt werden muss. Zudem müssen unterschiedliche Kettenglieder (mit und ohne Anschlag/Gegenanschlag) für den Reparaturfall vorgehalten werden.

Das Produktkatalog "Ketten und Kettenräder für die Schüttgutindustrie" der Firma KettenWulf GmbH (Februar 2018) zeigt auf Seite 62 eine Laschenkette mit den Merkmalen des Oberbegriffs des Anspruchs 1.

Aufgabe der vorliegenden Erfindung ist es daher, die mit Bezug zum Stand der Technik geschilderten Nachteile zu beseitigen und insbesondere eine Laschenkette und einen Förderstrang anzugeben, mit denen der Konstruktions-und Reparaturaufwand verringert wird.

Gelöst wird die Aufgabe durch eine Laschenkette, einen Förderstrang für einen Förderer und einen Förderer mit den Merkmalen der jeweiligen Ansprüche 1, 3 und 5.

Vorteilhafte Weiterbildungen der Laschenkette und des Förderstrangs sind in den abhängigen Ansprüchen und in der Beschreibung angegeben, wobei einzelne Merkmale der vorteilhaften Weiterbildungen in technisch sinnvoller Weise beliebig miteinander kombinierbar sind.

Gelöst wird die Aufgabe dadurch, dass alle Kettenglieder mindestens einen Anschlag und/oder mindestens einen Gegenanschlag aufweisen und dass die Anschläge und Gegenanschläge so ausgebildet sind, dass eine Verschwenkung von benachbarten Kettengliedern entgegen der Umlaufrichtung aus der fluchtenden Ausrichtung bis zu einem solchen maximalen Schwenkwinkel möglich ist, dass die Anschläge und Gegenanschläge von sich in einer vertikalen Kurvenfahrt befindlichen, benachbarten Kettengliedern in Anlage miteinander sind.

Die Erfindung sieht in ihrem Grundgedanken also vor, dass benachbarte Kettenglieder aus der fluchtenden Anordnung heraus mit einem kleinen Spiel entgegen der durch die im Bereich der Umlenkung definierten Umlaufrichtung gegeneinander verschwenkt/scharniert werden können. Dies führt zwar dazu, dass ein Kettenstrang zwischen zwei Laufrollen im Obertrum leicht durchhängen kann, dadurch wird aber auch ermöglicht, dass eine vertikale Kurvenfahrt mit einem relativ großen Radius von beispielsweise mehr als 4 Metern, bevorzugt mehr als 6 Metern möglich ist, ohne dass benachbarte Kettenglieder an bestimmten Stellen der Laschenkette gar keine Anschläge/Gegenanschläge aufweisen müssen. Soweit bevorzugt alle Kettenglieder (ggf. Außenkettenglieder und Innenkettenglieder) gleich ausgebildet sein können, wird dadurch einerseits der Konstruktionsaufwand und andererseits der Aufwand zur Vorhaltung von Ersatzteilen verringert.

Die erfindungsgemäßen Kettenglieder sind also so ausgebildet, dass sie in einer Richtung (Umlaufrichtung) mit einem relativ großen Schwenkwinkel aus der fluchtenden Ausrichtung zueinander verschwenkt werden können, sodass die Kette im Bereich einer Umlenkung einen relativ kleinen Radius ausbilden kann. Entgegen dieser als Umlaufrichtung bezeichneten Schwenkrichtung ist die Verschwenkung benachbarter Kettenglieder aus der fluchtenden Ausrichtung nur bis zu einem maximalen Schwenkwinkel möglich, der erfindungsgemäß sehr klein gewählt ist.

Bevorzugt sind die Anschläge und/oder Gegenanschläge so ausgebildet, dass benachbarte Kettenglieder mit aneinander anliegenden Anschlägen und Gegenanschläge (und somit in einer Verschwenkung entgegen der Umlaufrichtung) einen Kurvenradius von mindestens 4m [Meter], bevorzugt mindestens 5m, besonders bevorzugt mindestens 6m ausbilden. Andererseits sind die Anschläge/Gegenanschläge aber auch so ausgebildet, dass ein Kurvenradius von höchstens 30m, bevorzugt höchstens 20m durchfahren werden kann, bei welchem die Anschläge/Gegenanschläge aneinander anliegen.

Dies wird in Abhängigkeit der Länge der Kettenglieder insbesondere dann erreicht, wenn der maximale Schwenkwinkel benachbarter Kettenglieder (entgegen der Umlaufrichtung) höchstens 5°, bevorzugt höchstens 3°, besonders bevorzugt höchstens 1,5° beträgt. Andererseits sollte der maximale Schwenkwinkel mindestens 0,5°oder sogar mindestens 1,0° betragen.

Erfindungsgemäß ist der Anschlag als Nase einer Lasche eines Kettengliedes ausgebildet, sodass sich die Nase insbesondere in der Ebene der entsprechenden Lasche befindet, wobei der Gegenanschlag als von der Lasche eines benachbarten Kettenmitgliedes seitlich vorspringender Abstütznocken ausgebildet ist. Beispielsweise können die Nasen an den in Kettenlängsrichtung liegenden Enden der Außenlaschen der Außenkettenglieder ausgebildet sein, während die Abstütznocken von einer Außenseite der Innenlasche eines Innenkettenglieds nach außen hervorspringen.

Erfindungsgemäß ist zumindest an einer Lasche einer Mehrzahl der Kettenglieder, bevorzugt an allen Kettengliedern ein Winkelhalter angeordnet. Der Winkelhalter weist einen Befestigungsabschnitt auf, der sich in etwa parallel zu einer durch die Buchsen/Bolzen aufgespannten Ebene des Kettengliedes erstreckt.

Es kann vorgesehen sein, dass der Winkelhalter einteilig mit der Lasche ausgebildet ist.

Alternativ kann vorgesehen sein, dass der Winkelhalter als separates Bauteil an der ersten Lasche befestigt ist. So könnte ein entsprechender Winkelhalter an der Außenseite oder der Innenseite der ersten Lasche form-, kraft- und/oder stoffschlüssig angebracht, beispielsweise angeschraubt, angenietet oder angeschweißt sein. Der Winkelhalter könnte somit auch noch nachträglich an eine Laschenkette angebracht werden. Es könnte auch vorgesehen sein, dass ein entsprechender Winkelhalter im Bereich der Buchsen/Bolzen an der entsprechenden Lasche befestigt ist.

Beispielsweise kann die Laschenkette aus abwechselnd angeordneten Außenkettengliedern und Innenkettengliedern bestehen, wobei die zwei jeweils drehfest mit den Außenlaschen eines Außenkettengliedes verbundenen Bolzen innerhalb einer von zwei mit den Innenlaschen der benachbarten Innenkettengliedern drehfest verbundenen Buchsen angeordnet sind. Alternativ kann die Laschenkette aber auch als gekröpfte Kette ausgebildet sein, bei der jedes Kettenglied einen drehfest mit den Laschen verbundenen Bolzen und eine drehfest mit den Laschen verbundene Buchse aufweist, wobei der Bolzen eines Kettengliedes in der Buchse eines benachbarten Kettenglieds angeordnet ist. Ein Kettenglied umfasst also insbesondere entweder zwei Buchsen, zwei Bolzen oder eine Buchse und einen Bolzen. Die Laschenkette ist also insbesondere eine Buchsenförderkette.

Soweit es prinzipiell ausreichend ist, dass jede Lasche nur aus genau einer Einzellasche besteht, kann in einer Ausführungsform auch vorgesehen sein, dass eine Lasche aus zwei oder mehr Einzellaschen zusammengesetzt ist, wobei zumindest eine Einzellasche der ersten Lasche mit dem Winkelhalter versehen ist.

Der erfindungsgemäße Förderstrang weist insbesondere eine erfindungsgemäße Laschenkette auf. Der Förderstrang umfasst insbesondere ein Fördermittel in der Art eines Bechers, einer Platte oder einer Zelle, wobei das Fördermittel zumindest indirekt an der mindestens einen Laschenkette befestigt ist. Insbesondere ist vorgesehen, dass das Fördermittel die gleiche Teilung aufweist wie die Laschenkette.

Zur Befestigung des Fördermittels an der mindestens einen Laschenkette weisen die Fördermittel jeweils einen Montageabschnitt auf, der an einem Befestigungsabschnitt der Winkelhalter befestigt ist. Der Montageabschnitt kann insbesondere einteilig und somit in das Fördermittel selbst integriert sein. Es kann aber auch vorgesehen sein, dass der Montageabschnitt an einem Element ausgebildet ist, mit welchem das Fördermittel kraft-, form- und/oder stoffschlüssig verbunden beziehungsweise verbindbar ist.

Demgemäß wird auch ein Förderer, insbesondere ein Stahlgliederband, ein Becherwerk oder ein Zellenbecherwerk mit einem entsprechenden Förderstrang vorgeschlagen, wobei der Förderstrang in sich geschlossen ist. Insbesondere weist der Förderstrang auch Laufrollen oder Führungen auf, mit denen der Förderstrang an einer korrespondierenden Führung (beispielsweise Schiene) oder an korrespondierenden Laufrollen des Förderers geführt wird.

Die Erfindung sowie das technische Umfeld werden im Folgenden anhand der Figuren beispielhaft erläutert. Es zeigen schematisch
- Figur 1:: eine Laschenkette,
- Figur 2:: einen Förderstrang mit der schematisch angedeuteten Laschenkette und
- Figur 3:: eine schematische Darstellung der Laschenkette im Bereich einer vertikalen Kurvenfahrt.

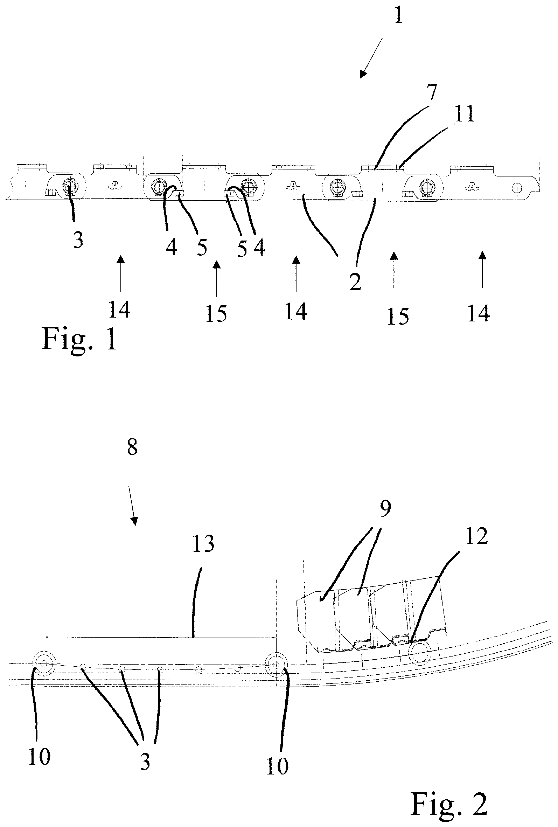

Figur 1 zeigt eine Seitenansicht auf eine Laschenkette 1, wobei Laschen 2 von Innenkettengliedern 15 und Außenkettengliedern 14 sichtbar sind. Die Außenkettenglieder 14 weisen in bekannter Weise zwei Laschen 2 auf, die jeweils über zwei Bolzen 3 miteinander verbunden sind, wobei in der Seitenansicht der Figur 1 jeweils nur eine Lasche 2 jedes Kettengliedes 13, 15 sichtbar ist. Die Innenkettenglieder 15 weisen ebenfalls zwei Laschen 2 auf, die über Buchsen miteinander verbunden sind. Die Bolzen 3 der Außenkettenglieder 14 sind in den Buchsen von benachbarten Innenkettengliedern 15 drehbar angeordnet.

Jede der dargestellten Laschen 2 weist einen Befestigungsabschnitt 11 umfassenden Winkelhalter 7 auf. Der Befestigungsabschnitt 11 erstreckt sich im Wesentlichen parallel zu der von den Buchsen beziehungsweise Bolzen 3 aufgespannten Ebene der Kettenglieder 14, 15. Wie insbesondere aus Figur 2 hervorgeht, ist an dem Befestigungsabschnitt 11 eines Kettengliedes ein Fördermittel 9 mittels eines Montageabschnitts 12 befestigt. Die Winkelhalter 7 und die Fördermittel 9 sind an sich bekannt.

Aus Figur 1 ist zu erkennen, dass die Laschen 2 der Außenkettenglieder 14 an ihren in Längsachse der Laschenkette 1 ausgebildeten Enden Anschläge 4 in Form von Nasen aufweisen. Die Laschen 2 der Innenkettenglieder 15 weisen hingegen seitlich hervorspringende Gegenanschläge 5 auf.

Durch die Ausbildung der Anschläge 4 und Gegenanschläge 5 wird eine Schwenkbewegung von benachbarten Kettengliedern 14, 15 entgegen einer Umlaufrichtung begrenzt. Ein Verschwenken benachbarter Kettenglieder 14, 15 zueinander in Umlaufrichtung insbesondere im Bereich einer Umlenkung ist hingegen ohne weiteres möglich.

Es ist nun vorgesehen, dass die Anschläge 4 und Gegenanschläge 5 so ausgebildet sind, dass ein Verschwenken entgegen der Umlaufrichtung aus der fluchtenden Ausrichtung hinaus möglich ist, wobei die Schwenkbewegung auf einen maximalen Schwenkwinkel 6 begrenzt ist. Aufgrund der kleinen Größe des maximalen Schwenkwinkels ist dies in Figur 1 nicht deutlich zu erkennen.

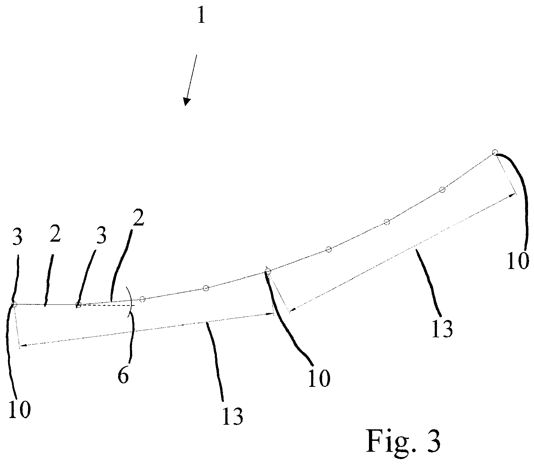

In den Figuren 2 und 3 ist ein Verschwenken über die fluchtende Anordnung entgegen der Umlenkrichtung jedoch schematisch angedeutet. So zeigt Figur 2 einen Förderstrang 8 mit einer angedeuteten Laschenkette 1, mit an der Laschenkette 1 angebrachten Fördermitteln 9 und mit Laufrollen 10. Die Teilung der Fördermittel 9 entspricht dabei der Teilung der Laschenkette 1.

Die Laufrollen 10 unterteilen die Laschenkette 1 in mehrere Kettenstränge 13. Aus Figur 2 ist deutlich zu erkennen, dass der Kettenstrang 13 zwischen den Laufrollen 10 leicht nach unten durchhängt, da die Anschläge 4 und Gegenanschläge 5 der Kettenglieder 14, 15 so ausgebildet sind, dass ein leichtes Verschwenken benachbarter Kettenglieder über eine fluchtende Anordnung hinaus entgegen der Umlenkrichtung möglich ist.

In Figur 3 ist eine vertikale Kurvenfahrt zweier benachbarter Kettenstränge 13 angedeutet. Zwei im Bereich eines Bolzens 3 miteinander schwenkbar verbundenen Laschen 2 können bis zu einem maximalen Schwenkwinkel 6 entgegen der Umlaufrichtung zueinander verschwenkt werden, wobei die Größe des maximalen Schwenkwinkels 6 durch die Ausbildung der Anschläge 4 und Gegenanschläge 5 vorgegeben ist. Es ist somit möglich, dass der Förderstrang 8 eine vertikale Kurve mit einem Radius von einigen Metern zur Überwindung einer vertikalen Höhendifferenz durchfahren kann, ohne dass Kettenglieder im Bereich der Aufhängung der Laufrollen 10 anders ausgeführt sein müssten als die Kettenglieder im Bereich der Kettenstränge 13 zwischen den Laufrollen 10. Somit wird der Wartungsaufwand einer solchen Laschenkette 1 und eines damit ausgestatteten Förderers verringert.

### Bezugszeichenliste

- 1: Laschenkette
- 2: Lasche
- 3: Bolzen
- 4: Anschlag
- 5: Gegenanschlag
- 6: Schwenkwinkel
- 7: Winkelhalter
- 8: Förderstrang
- 9: Fördermittel
- 10: Laufrolle
- 11: Befestigungsabschnitt
- 12: Montageabschnitt
- 13: Kettenstrang
- 14: Außenkettenglied
- 15: Innenkettenglied

## Patentansprüche

1. Laschenkette (1) für einen Förderer,
mit mehreren Kettengliedern, umfassend
- jeweils eine erste und eine zweite Lasche (2), sowie
- jeweils mindestens eine Buchse und/oder mindestens einen Bolzen (3), die die zwei Laschen (2) miteinander verbinden und zueinander beabstanden, wobei der Bolzen (3) eines Kettengliedes innerhalb der Buchse eines benachbarten Kettenglieds drehbar angeordnet ist,
wobei
- benachbarte Kettenglieder in einer Umlaufrichtung zur Ausbildung einer in sich geschlossenen Laschenkette zueinander frei verschwenkbar sind und
- zumindest einige benachbarte Kettenglieder einen Anschlag (4) und/oder Gegenanschlag (5) zur Begrenzung des Schwenkwinkels der benachbarten Kettenglieder entgegen der Umlaufrichtung aufweisen,
wobei der Anschlag (4) als Nase einer Lasche eines Kettengliedes ausgebildet ist und der Gegenanschlag (5) als von der Lasche eines benachbarten Kettengliedes vorspringender Abstütznocken ausgebildet ist und wobei an zumindest einer Lasche (2) einer Mehrzahl der Kettenglieder ein Winkelhalter (7) angeordnet ist,
**dadurch gekennzeichnet, dass** alle Kettenglieder mindestens einen Anschlag (4) und/oder mindestens einen Gegenanschlag (5) aufweisen und dass die Anschläge (4) und Gegenanschläge (5) so ausgebildet sind, dass eine Verschwenkung von benachbarten Kettengliedern entgegen der Umlaufrichtung aus der fluchtenden Ausrichtung bis zu einem solchen maximalen Schwenkwinkel möglich ist, dass die Anschläge (4) und Gegenanschläge (5) von sich in einer vertikalen Kurvenfahrt befindlichen, benachbarten Kettengliedern in Anlage miteinander sind.

2. Laschenkette nach Anspruch 1, wobei der Kurvenradius der sich in der vertikalen Kurvenfahrt befindlichen Kettenglieder mindestens 4m beträgt.

3. Förderstrang (8) für einen Förderer, umfassend
- mindestens eine in sich geschlossene Laschenkette (1) nach einem der Ansprüche 1 oder 2,
- mindestens ein Fördermittel (9), welches an der mindestens einen Laschenkette (1) befestigt ist und
- mehrere Führungselemente (10) zur Führung des Förderstrangs (1) an einer Führung eines Förderers.

4. Förderstrang (8) nach Anspruch 3, wobei die Fördermittel (9) über einen Montageabschnitt (12) an einem Befestigungsabschnitt (11) der Winkelhalter (7) befestigt sind.

5. Förderer, insbesondere Horizontalförderer, mit einem Förderstrang nach Anspruch 3 oder 4.

## Claims

1. A link plate chain (1) for a conveyor,
with several chain links, comprising
- a respective first and a second link plate (2), as well as
- at least one respective bushing and/or at least one bolt (3), which connect and space apart the two link plates (2), wherein the bolt (3) of a chain link is rotatably arranged inside the bushing of an adjacent chain link,
wherein
- adjacent chain links can be freely swiveled relative to each other in a circumferential direction to yield a self-contained link plate chain, and
- at least several adjacent chain links have a stop (4) and/or counter-stop (5) to limit the swiveling angle of the adjacent chain links opposite the circumferential direction,
wherein the stop (4) is designed as a nose of a link plate of a chain link, and the counter-stop (5) is designed as a support cam protruding from the link plate of an adjacent chain link, and wherein bracket (7) is arranged on at least one link plate (2) of a plurality of the chain links,
**characterized in that** all chain links have at least one stop (4) and/or at least one counter-stop (5), and that the stops (4) and counter-stops (5) are designed in such a way as to enable adjacent chain links to swivel opposite the circumferential direction from the aligned orientation up to such a maximum swiveling angle that the stops (4) and counter-stops (5) of adjacent chain links which are in a vertical curve travel abut against each other.

2. The link plate chain according to claim 1, wherein the curve radius of the chain links which are in the vertical curve travel measures at least 4 m.

3. A conveyor line (8) for a conveyor, comprising
- at least one self-contained link plate chain (1) according to one of claims 1 or 2,
- at least one conveying means (9), which is fastened to the at least one link plate chain (1), and
- several guide elements (10) for guiding the conveyor line (1) on a guide of a conveyor.

4. The conveyor line (8) according to claim 3, wherein the conveying means (9) are fastened to a fastening section (11) of the bracket (7) via an assembly section (12).

5. A conveyor, in particular a horizontal conveyor, with a conveyor line according to claim 3 or 4.

## Revendications

1. Chaîne articulée (1) pour un convoyeur,
avec plusieurs maillons de chaîne, comprenant
- respectivement une première et une deuxième éclisse (2), ainsi que
- respectivement au moins un coussinet et/ou au moins un fuseau (3), qui relient entre elles les deux éclisses (2) et les maintient à distance l'une de l'autre, sachant que le fuseau (3) d'un maillon de chaîne est disposé pouvant tourner à l'intérieur du coussinet d'un maillon de chaîne voisin,
sachant que
- les maillons de chaîne voisins peuvent pivoter librement l'un par rapport à l'autre dans un sens de rotation pour former une chaîne articulée fermée sur elle-même et
- au moins plusieurs maillons de chaîne voisins comportent une butée (4) et/ou contrebutée (5) pour limiter l'angle de pivotement des maillons de chaîne voisins à l'opposé du sens de rotation,
sachant que la butée (4) est constituée sous la forme d'un mentonnet d'une éclisse d'un maillon de chaîne et la contrebutée (5) est constituée sous la forme d'une came de support faisant saillie de l'éclisse d'un maillon de chaîne voisin et sachant qu'une équerre de support (7) est disposée sur au moins une éclisse (2) d'une pluralité de maillons de chaîne,
**caractérisé en ce que** tous les maillons de chaîne comportent au moins une butée (4) et/ou au moins une contrebutée (5) et **en ce que** les butées (4) et contrebutées (5) sont constituées de telle sorte qu'un pivotement des maillons de chaîne voisins à l'opposé du sens de rotation est possible de l'orientation alignée jusqu'à un angle de pivotement maximal tel que les butées (4) et contrebutées (5) des maillons de chaîne voisins se trouvant dans une trajectoire courbe verticale sont en contact les unes avec les autres.

2. Chaîne articulée selon la revendication 1, sachant que le rayon de courbe des maillons de chaîne se trouvant dans la trajectoire en courbe est au moins de 4 m.

3. Ligne de transport (8) pour un convoyeur, comprenant
- au moins une chaîne articulée (1) fermée sur elle-même selon l'une quelconque des revendications 1 ou 2,
- au moins un moyen de transport (9), lequel est fixé à au moins une chaîne articulée (1) et
- plusieurs éléments de guidage (10) pour guider la ligne de transport (1) sur un guidage d'un convoyeur.

4. Ligne de transport (8) selon la revendication 3, sachant que les moyens de transport (9) sont fixés à une section de fixation (11) des équerres de support (7) par le biais d'une section de montage (12).

5. Convoyeur, en particulier convoyeur horizontal, avec une ligne de transport selon la revendication 3 ou 4.
